Europäisches Patentamt

European Patent Office

Office européen des brevets

(19)

(11) Publication number: **0 083 811**
**B1**

(12) # EUROPEAN PATENT SPECIFICATION

(45) Date of publication of patent specification: **05.03.86**

(51) Int. Cl.⁴: **B 01 D 45/12**

(21) Application number: **82201420.5**

(22) Date of filing: **09.11.82**

(54) **Apparatus for separating mixtures of liquid and gas.**

(30) Priority: **27.11.81 GB 8135820**

(43) Date of publication of application:
**20.07.83 Bulletin 83/29**

(45) Publication of the grant of the patent:
**05.03.86 Bulletin 86/10**

(84) Designated Contracting States:
**BE DE FR GB IT NL**

(56) References cited:
**EP-A-0 048 508**
**WO-A-81/01961**
**DE-A-2 818 510**
**DE-B-1 769 240**
**US-A-2 625 240**

(73) Proprietor: **SHELL INTERNATIONALE
RESEARCH MAATSCHAPPIJ B.V.**
**Carel van Bylandtlaan 30
NL-2596 HR Den Haag (NL)**

(72) Inventor: **Pek, Johan J. B.
Badhuisweg 3
NL-1031 CM Amsterdam (NL)**
Inventor: **Schuurmans, Hubertus J. A.
Carel van Bylandtlann 30
NL-2596 HR The Hague (NL)**

(74) Representative: **Aalbers, Onno et al
P.O. Box 302
NL-2501 CH The Hague (NL)**

Courier Press, Leamington Spa, England.

# Description

The present invention relates to a vertical column for separating liquid from admixture with gas comprising above the gas inlet of the column at least one set of two horizontal trays with a plurality of vertical swirl tubes containing swirl imparting means, each swirl tube being mounted on an opening in the lower tray and each swirl tube being provided with a primary gas outlet tube of smaller diameter mounted on an opening in the upper tray coaxial with the said swirl tube, the swirl tube extending upwardly in the space between the trays and having its upper end at some distance below the upper tray and the primary gas outlet tube extending downwardly in the space between the trays and having its lower end at some distance below the upper end of the swirl tube, the space between the trays outside the swirl tubes being provided with liquid outlet means and with separate secondary gas outlet means provided in the upper tray for conducting secondary gas from the space between the trays outside the swirl tubes to the space above the upper tray.

Columns of the above-mentioned type are suitable for separating liquid/gas mixtures, as well as for contacting a liquid with a gas for creating an exchange of matter and/or heat between the phases, followed by a separation of the phases.

An example of the above-mentioned column for separating mixtures of liquid and gas is described in EP—A—0048508 (priority date: 18.9.80; filed: 28.8.81; published: 31.3.82). This earlier column is provided with primary gas outlet tubes for discharging gas directly from the swirl tubes into the space above the upper tray and with secondary gas outlet tubes for discharging secondary gas from the space between the trays outside the swirl tubes to the space above the upper tray. The gas from the primary gas outlet tube and the gas from the secondary gas outlet tube are directly united after leaving the relevant outlet tubes. By applying a primary gas outlet tube having a lower end with a cross-sectional area which is relatively small compared with the cross-sectional area of the swirl tube and arranging said lower end of the primary gas outlet tube below the upper end of the swirl tube, a substantially liquid-free gas stream may be discharged via the primary gas outlet tube. Especially at relatively high liquid loads and/or relatively high flow velocities, however, it may occur that the gas stream from the secondary gas outlet tube contains some liquid entrained from the space between the trays outside the swirl tubes. As a consequence of the above, the final gas product from the earlier column may still contain minor amounts of liquid.

The object of the present invention is to improve the earlier column in order to obtain a column enabling the separation of liquid/gas mixtures in substantially gas-free liquid and substantially liquid-free gas even at high liquid loads and high flow velocities.

In the column for separating liquid from admixture with gas according to the invention the secondary gas outlet means are connected to the inlet end of a secondary separating device for separating liquid from the secondary gas of which the gas outlet means are connected to the same space as the primary gas outlet tubes of the swirl tubes.

In the column according to the invention the gas from the secondary gas outlets is passed to the second stage separator for removing the liquid entrained by the gas from said secondary gas outlet, prior to uniting the gas from the primary outlet tube and the gas from the secondary gas outlet.

In the column described in EP—A—0048508 the gas from the secondary gas outlets is directly added to the gas from the primary gas outlet tubes, so that at high liquid loads and/or flow velocities the quality of the substantially liquid-free gas from the primary gas outlet tubes may be adversely affected by relatively wet gas from the secondary gas outlets. For further drying the gas the whole mass of gas from the primary gas outlet tubes and the secondary gas outlets must then be treated.

In the column according to the invention however, only a small portion of the total mass of gas, viz. only the gas from the secondary gas outlets needs to be further treated, for obtaining a substantially liquid-free total mass of gas. The second stage separator for treating the gas from the secondary gas outlets according to the invention may therefore be relatively small-sized in case of the application of a separate second stage separator. Further, the column according to the invention may be efficiently operated at liquid loads and/or flow velocities, that would give rise to a less efficient separation in the known column. As a consequence thereof the size of the column according to the invention designed for a given throughput is smaller than with the known column, which results in a considerable cost reduction.

It is noted that from WO—A—81/01961 a two stage separator is known comprising a swirl tube with gas inlet means and swirling means and a primary gas outlet tube and means to discharge liquid from the swirl tube and a space to separate this liquid from the secondary gas that is discharged with this liquid. However the secondary gas is admixed with the gas in the swirl tube and hence the secondary gas is not treated in a second stage separator and not admixed with the primary gas from the swirl tube primary gas outlet.

In a suitable embodiment of the invention the second stage separator comprises filter means for separating the liquid and the gas discharged via the secondary gas outlet, wherein the upper end of the primary gas outlet tube is arranged above the filter means.

The invention will now be described by way of example only in more detail with reference to the accompanying drawings, wherein:

Figure 1 shows a vertical section of the lower part of a column according to an embodiment of the invention; and

Figure 2 shows a vertical section of the lower part of a column according to another embodiment of the invention.

It is noted that identical elements shown in the drawings have been indicated with the same reference numeral.

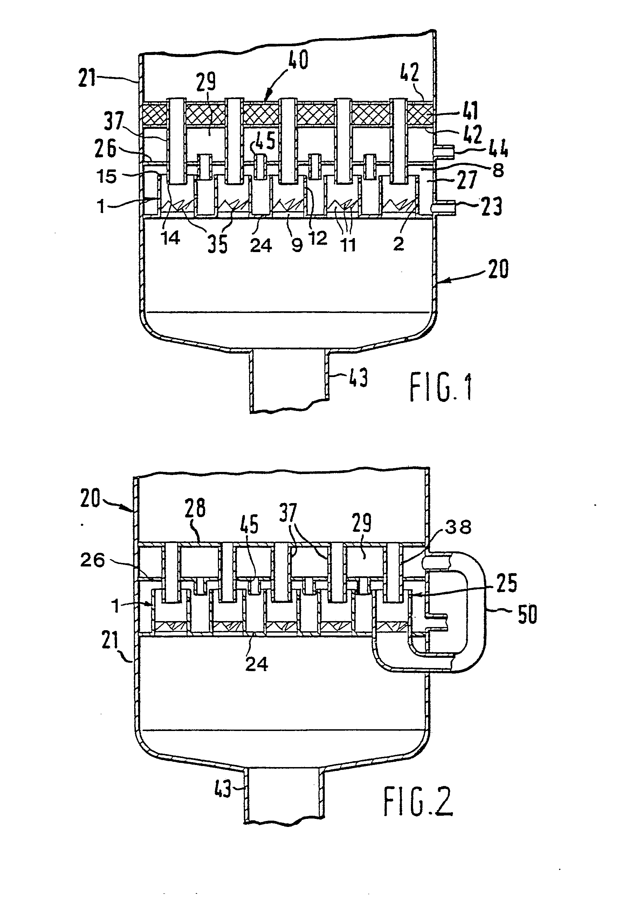

Figure 1 shows a column 20 according to the invention for separating liquid from gas, which contains a number of swirl tubes 1 mounted between horizontal trays 24 and 26 above the gas inlet 43.

Each swirl tube 1 comprises a tubular wall 2 being mounted on an opening 9 of the lower tray 24. The upper tray 26 is arranged at some distance above the upper end 15 of the tubular wall 2, thereby creating a fluid passage 8 between the interior of the swirl tubes 1 and the space 27 between the trays 24 and 26 outside the swirl tubes. Through the open lower end 9 of each swirl tube 1 the liquid-containing gas can be supplied to a vane assembly 35 consisting of a plurality of blades 11 and being arranged inside the tubular wall 2. The tubular wall 2 of each swirl tube 1 is provided with a number of liquid discharge openings 12, equally distributed along the periphery of said wall 2 and positioned downstream of the vane assembly 35. A primary gas outlet tube 37 passing through an opening in the upper tray 26 has its lower end 14 arranged below the upper end 15 of the tubular wall 2, thereby extending into the swirl tube 1. The primary gas outlet tube 37, vane assembly 35 and tubular wall 2 are substantially co-axially arranged relative to each other. The upper tray 26 is further provided with tubes 45 forming a secondary gas outlet for discharging secondary gas from the space 27 between the trays 24 and 26 outside the swirl tubes 1. An outlet tube 23 having one end thereof arranged in an opening in the wall of the column 20, serves to discharge liquid from the space 27.

In operation, a liquid-containing gas is introduced into the column 20 via the gas inlet 43 and flows upwardly into the swirl tubes 1 via their openings 9 and passes through the vane assembly 35, whereby the blades 11 of said vane assembly 35 impart a rotary movement to the gas/liquid mixture. By this rotary movement the liquid droplets are flung outwardly to coalesce on the inner surface of the tubular wall 2. The liquid layer which is so formed on the inner surface of the tubular wall 2 passes partly through the liquid discharge openings 12 in the tubular wall 2 and partly through the fluid passage 8. The separated liquid is collected in the space 27 and is subsequently discharged from said space 27 via the liquid outlet tube 23.

The major part of the gaseous components of the gas/liquid mixture supplied to the swirl tubes 1, is discharged via the primary gas outlet tubes 37. In order to prevent entrainment of liquid collected on the inner surface of the tubular walls 2 by the gas discharged via the primary gas outlet tubes 37, the cross-sectional area of the primary gas outlet tubes 37 should be substantially smaller than the cross-sectional area of the tubular walls 2. A suitable cross-sectional area of the primary gas outlet tubes 37 may be chosen within the range of 15 through 65 per cent of the cross-sectional area of the tubular walls 2. In this range of cross-sectional areas the gas passing through the primary gas outlet tubes 37 will be substantially liquid-free, without an inadmissible increase of the pressure drop over the swirl tubes 1.

The liquid separated from the gas stream by the action of the vane assembly 35 and entering into the space 27 may contain small amounts of the entrained "secondary" gas. This gas is discharged from said space 27 via the secondary gas outlets 45. Especially at high liquid loads and/or high flow velocities in the swirl tubes 1, it may happen that liquid is entrained by the gas leaving the space 27 via the secondary gas outlets 45. To prevent that in this case the quality of the gas stream from the primary gas outlet tubes 37 is adversely affected by wet gas from the secondary gas outlets 45 upon admixture therewith, the secondary gas stream is further treated to separate the liquid therefrom. To this end the secondary gas stream is passed to the inlet end of the secondary separating device 40 comprising filter means arranged around the primary gas outlet tubes 37. The filter means 40 comprises a layer 41 of closely packed fibres, for example made of stainless steel, arranged between a pair of perforated walls 42, secured to the tubular shell 21 of column 20, having a conventional inlet 43 arranged in the bottom part of the column 20. Apart from the liquid outlet 23 the column partly shown in Figure 1 is provided with a further liquid outlet 44 for withdrawing liquid separated by the filter means.

During operation of the apparatus shown in Fig. 1 substantially liquid-free gas separated from a mixture of liquid and gas supplied via the inlet 43 to the swirl tubes 1 forming the first stage separators is discharged via the primary gas outlet tubes 37. The gas entrained by the liquid discharged from the swirl tubes 1 passes through the secondary gas outlet tubes 45 and subsequently enters the filter means 40, forming the second stage separator. In the filter means 40, entrained liquid droplets are separated from the secondary gas, so that substantially liquid-free secondary gas leaves the filter means 40 via the upper perforated wall 42. The liquid separated from the gas passing through the filter means 40 is withdrawn from the column via the liquid outlet 44. By the arrangement of the secondary gas outlet tubes 45 having their lower ends arranged below the lower surface of the upper tray 26, the risk of entrainment of liquid by the secondary gas is already considerably reduced so that even at high liquid loads and/or flow velocities only minor amounts of liquid have to be separated by the filter means 40.

In Fig. 2 an alternative of the column shown in the preceding Figure, has been depicted. In this embodiment of the present invention the column 20 is provided with a conduit 50 forming a fluid communication between the secondary gas-collecting space 29 and the inlet of a special swirl tube 25. During operation of the apparatus shown in Fig. 2, gas from the secondary gas outlet tubes 45 is collected in the secondary gas-collecting space 29, whereas substantially liquid-free gas from the primary gas outlet tubes 37 enters the part of the column arranged above the wall 28. Due to the pressure difference over the primary gas outlet tubes 37, the secondary gas is urged to flow from the secondary gas-collecting space 29 to the said swirl tube 25 via conduit 50. In this swirl tube, operating as a second stage separator, the liquid entrained by the secondary gas is separated and withdrawn from the gas, so that substantially liquid-free gas leaves the relevant swirl tube 25 via the accompanying primary gas outlet tube 38.

Although in the last-mentioned embodiment of the invention the swirl tube 25 operating as the second stage separator is arranged at the same level as the other swirl tubes 1, operating as first stage separators, it will be understood that the second stage separator may also be arranged at a level different from the level at which the first stage separators are arranged. The second stage separator may, for example, be mounted in an opening of the wall 28. In such an arrangement the conduit 50 for recirculating the secondary gas is deleted, whereas the second stage separator should be provided with a separate space for collecting the liquid separated in this second stage separator.

Although Fig. 1 shows an embodiment of the invention, wherein filter means in the form of closely packed fibres are applied as a second stage separator, it will be understood that any other type of filter means may be applied, such as baffles or vanes being inclined with respect to the flow direction of the secondary gas.

## Claims

1. A vertical column for separating liquid from admixture with gas comprising above the gas inlet of the column at least one set of two horizontal trays with a plurality of vertical swirl tubes containing swirl imparting means, each swirl tube being mounted on an opening in the lower tray and each swirl tube being provided with a primary gas outlet tube of smaller diameter mounted on an opening in the upper tray coaxial with the said swirl tube, the swirl tube extending upwardly in the space between the trays and having its upper end at some distance below the upper tray and the primary gas outlet tube extending downwardly in the space between the trays and having its lower end at some distance below the upper end of the swirl tube, the space between the trays outside the swirl tubes being provided with liquid outlet means and with separate secondary gas outlet means provided in the upper tray for conducting secondary gas from the space between the trays outside the swirl tubes to the space above the upper tray, characterized in that the secondary gas outlet means are connected to the inlet end of a secondary separating device for separating liquid from the secondary gas of which the gas outlet means are connected to the same space as the primary gas outlet tubes of the swirl tubes.

2. A column as claimed in claim 1, characterized by a collecting zone for secondary gas above the upper tray, which collecting zone is traversed by the primary gas outlet tubes and which collecting zone is connected to the secondary separating device.

3. A column as claimed in claim 2, in which the secondary separating device comprises a layer of filter means, such as a layer of closely packed fibres or a plurality of inclined vanes, above said collecting zone and traversed by the primary gas outlet tubes, liquid discharge means being provided for discharging separate liquid from the collecting zone.

4. A column as claimed in claim 2, in which the secondary separating device comprises at least one swirl tube with coaxial gas outlet tube mounted on the said set of two horizontal trays in the same way as the swirl tubes and gas outlet tubes for primary gas, the gas inlet end of the swirl tube for secondary gas being connected to the said collecting zone.

## Patentansprüche

1. Vertikale Kolonne zur Trennung von Flüssigkeit und Gas mit über der Gaszuleitung in die Kolonne zumindest einer Reihe von zwei horizontalen Tassen mit einer Vielzahl von Vertikal-Wirbelrohren, enthaltend Mittel zur Erzeugung von Wirbeln, wobei jedes Wirbelrohr auf einer Öffnung in der unteren Tasse befestigt und mit einem primären Gasauslaßrohr geringen Durchmessers an einer Öffnung in der oberen Tasse koaxial mit dem Wirbelrohr fixiert ist und sich das Wirbelrohr aufwärts in den Raum zwischen den Tassen erstreckt und in einem gewissen Abstand unter der oberen Tasche endet; das primäre Gasauslaßrohr sich nach unten in dem Raum zwischen die Tassen erstreckt und sein unteres Ende in einem gewissen Abstand unter dem oberen Ende des Wirbelrohrs sich befindet, wobei der Raum zwischen den Tassen außerhalb der Wirbelrohre mit Flüssigkeitableitungen versehen ist und eine getrennte zweite Gasableitung in der oberen Tasse für die Abführung von Sekundärgas aus dem Raum zwischen den Tassen außerhalb der Wirbelrohre in den Raum über der oberen Tasse vorgesehen ist, dadurch gekennzeichnet, daß die sekundäre Gasableitung mit dem Eintrittende einer sekundären Trennvorrichtung für die Abscheidung von Flüssigkeit aus dem Sekundärgas verbunden ist, deren Gasableitungen mit dem gleichen Raum wie die primären Gasableitungsrohre der Wirbelrohre in Verbindung stehen.

2. Kolonne nach Anspruch 1, dadurch gekennzeichnet, daß eine Sammelzone für Sekundärgas über der oberen Tasse vorgesehen ist, die überquert wird durch die primären Gasauslaßrohre und die mit der sekundären Trennvorrichtung in Verbindung steht.

3. Kolonne nach Anspruch 2, dadurch gekennzeichnet, daß die sekundäre Trennvorrichtung eine Lage eines Filtermediums umfaßt, wie eine Lage dichtgepackter Fasern oder eine Vielzahl von geneigten Leitelementen über der Sammelzone und durchquert von den Primär-Gasabeleitungsrohren und schließlich Flüssigkeits-Ableitungen vorgesehen sind, um aus der Sammelzone die abgetrennte Flüssigkeit auszutragen.

4. Kolonne nach Anspruch 2, dadurch gekennzeichnet, daß die sekundäre Trennvorrichtung zumindest ein Wirbelrohr mit koaxialem Gasableitungsrohr, fixiert an der Reihe der zwei horizontalen Tassen in der gleichen Weise wie die Wirbelrohre und Gasableitrohre für Primärgas, wobei das Gaseintrittsende des Wirbelrohrs für Sekundärgas mit der Sammelzone in Verbindung steht.

**Revendications**

1. Colonne verticale pour séparer un liquide d'un mélange avec un gaz comprenant au-dessus de l'entrée de gaz de la colonne au moins un ensemble de deux plateaux horizontaux avec plusieurs tubes de brassage verticaux contenant des moyens pour produire un brassage, chaque tube de brassage étant monté sur une ouverture dans le plateau inférieur et chaque tube de brassage étant muni d'un tube de sortie de gaz primaire de plus faible diamètre monté sur une ouverture dans le plateau supérieur coaxiale avec ledit tube de brassage, le tube de brassage s'étendant vers le haut dans l'espace compris entre les plateaux et ayant son extrémité supérieure à une certaine distance en-dessous du plateau supérieur et le tube de sortie de gaz primaire s'étendant vers le bas dans l'espace compris entre les plateaux etayant son extrémité inférieure à une certaine distance en-dessous de l'extrémité supérieure du tube de brassage, l'espace entre les plateaux à l'extérieur des tubes de brassage étant muni d'un moyen de sortie de liquide et avec un moyen de sortie de gaz secondaire séparé fourni dans le plateau supérieur pour conduire le gaz secondaire de l'espace compris entre les plateaux à l'extérieur des tubes de brassage à l'espace situé au-dessus du plateau supérieur, caractérisée en ce que les moyens de sortie de gaz secondaire sont reliés à l'extrémité d'entrée d'undispositif de séparation secondaire pour séparer le liquide du gaz secondaire pour séparer le liquide du gaz secondaire dont les moyens de sortie de gaz sont reliés au même espace que les tubes de sortie de gaz primaire des tubes de brassage.

2. Colonne selon la revendication 1, caractérisée par une zone de collecte pour le gaz secondaire au-dessus du plateau supérieur, laquelle zone de collecte est traversée par les tubes de sortie de gaz primaire et laquelle zone de collecte est reliée au dispositif de séparation secondaire.

3. Colonne selon la revendication 2, où le dispositif de séparation secondaire comprend une couche de moyens de filtration, comme une couche de fibres étroitement tassées ou plusieurs ailettes inclinées, au-dessus de ladite zone de collecte et traversée par les tubes de sortie de gaz primaire, des moyens de déversement de liquide étant assurés pour déverser le liquide séparé de la zone de collecte.

4. Colonne selon la revendication 2, où le dispositif de séparation secondaire comprend au moins un tube de brassage avec un tube de sortie de gaz coaxial monté sur ledit ensemble de deux plateaux horizontaux de la même manière que les tubes de brassage et les tubes de sortie de gaz pour le gaz primaire, l'extrémité d'entrée de gaz du tube de brassage pour le gaz secondaire étant reliée à ladite zone de collecte.

FIG.1

FIG.2